Europäisches Patentamt

European Patent Office

Office européen des brevets

(11) Veröffentlichungsnummer: **0 150 703**
A2

## (12) EUROPÄISCHE PATENTANMELDUNG

(21) Anmeldenummer: **84890250.8**

(51) Int. Cl.⁴: **B 60 B 25/14**

(22) Anmeldetag: **19.12.84**

(30) Priorität: **21.12.83 AT 4461/83**

(43) Veröffentlichungstag der Anmeldung: **07.08.85**
**Patentblatt 85/32**

(84) Benannte Vertragsstaaten: **BE DE FR GB IT NL**

(71) Anmelder: **Wirmsberger, Gerhard, Rooseveltstrasse 2c,
A-4400 Steyr (AT)**

(72) Erfinder: **Wirmsberger, Gerhard, Rooseveltstrasse 2c,
A-4400 Steyr (AT)**

(54) **Felge.**

(57) Gegenstand der Erfindung ist eine zwei- oder mehrteilige Felge, insbesondere für Schrägschulterreifen, die zumindest zwei Elemente enthält, die an um den Umfang der Felge verteilten Stellen (3, 5) in Axialrichtung der Felge ineinandergreifen, wobei diese Stellen einen bestimmten Winkelbereich der Felge umfassen, wobei durch das gegenseitige Bewegen dieser zwei Elemente ein Sperren bzw. Lösen dieser Elemente erreicht wird, wobei eine radiale und axiale, vorzugsweise um 360° der Felge sich erstreckende, Abstützung (1) für den Reifen im abschliessbaren Bereich der Grundfelge (6) in einstückiger Form vorliegt, welche Abstützung – in Umfangsrichtung der Felge gesehen – zumindest einmal eine Unterbrechung (13) aufweist.

Beschreibung zur Patentanmeldung "Felge"

Gegenstand der Erfindung ist eine zwei- oder mehrteilige
Felge, insbesondere für Schrägschulterreifen von Kraftfahrzeugen, die zumindest zwei Elemente enthält, die an
um den Umfang der Felge verteilten Stellen in Axialrichtung der Felge vorzugsweise ineinandergreifend anordbar
sind, wobei diese Stellen einen bestimmten Winkelbereich
der Felge umfassen, wobei durch das gegenseitige, vorzugsweise einen Winkelbereich der Felge umfassende, Bewegen dieser zwei Elemente ein Sperren bzw. Lösen dieser
Elemente erreicht wird, wobei Mittel vorgesehen sind,
um besagtes Sperren zu sichern, wobei eine radiale und
axiale, vorzugsweise um 360° der Felge sich erstreckende,
Abstützung für den Reifen im abschließbaren Bereich der
Felge in einstückiger Form vorliegt.

Solche Felgen sind bekannt, so aus der AT-PS 187 810.
Darin wird eine Felge angegeben, bei der Verschlußring
2 mit der üblichen Stahlschrägschulter in seinem Umfang
festgelegt ist. Dadurch ist ein paßgenauer Sitz auf der
Grundfelge 15 unmöglich, da naturgemäß Toleranzen wegen
der Montage und Demontage nötig sind.

Erfindungsgemäß wird daher vorgeschlagen, bei obiger
Felge einen Verschlußring vorzusehen, der geschlitzt
ist, um einen schlagfreien Sitz auf der Grundfelge zu
erreichen.

Weiters wird erfindungsgemäß vorgeschlagen, bei obiger
Felge eine Abdeckung anzuwenden, die sich vorzugsweise
um 360° der Felge erstreckt, um die Berührungsflächen
der genannten zwei Elemente gegen Schmutz und dergleichen zu schützen. Ein slocher Schutz, also eine Abdek-
kung, ist bei einer Ausführung gemäß AT-PS 187 810 nachteilig, da sich mit dem sich ablagernden Schmutz das

/.

Spiel der Verschlußringe 2 und 11 mit der Grundfelge 15 egalisiert.

In der US-PS 1 223 635 werden Felgen angegeben, die sehr schwierig zu montieren und zu demontieren sind, da die Berührungsflächen der einzelnen Felgenteile ein großes Ausmaß haben und daher an vielen Stellen klemmen, zumal der Verschlußteil in seinem Umfang festgelegt sind, wodurch ein sehr kompliziertes Zusammenfügen der Felgenteile resultiert.

Weiters wird erfindungsgemäß vorgeschlagen, eine Sperre der genannten Stellen um mehr als nur einen Zwischenraum dieser Stellen bzw. auf mehr als nur eine Stelle erstrecken zu lassen.

Im Rahmen der Erfindung liegt es, daß diese Sperren in zusammenhängender Form gegeben sind. Auch können diese Sperren einstückig mit der genannten Abstützung oder/ und Abdeckung verbunden sein.

Weitere Einzelheiten der Erfindung werden mit den Zeichnungen erklärt. Es zeigen:

> Fig. 1 in Draufsicht eine erfindungsgemäße Ausführung einer Felge,
>
> Fig. 2 dasselbe im Querschnitt,
>
> Fig. 3, im Schnitt gemäß A - A von Fig. 1,
>
> Fig. 4, im Schnitt gemäß B - B von Fig. 2, jedoch um 90° gedreht, weitere Ausgestaltungen.

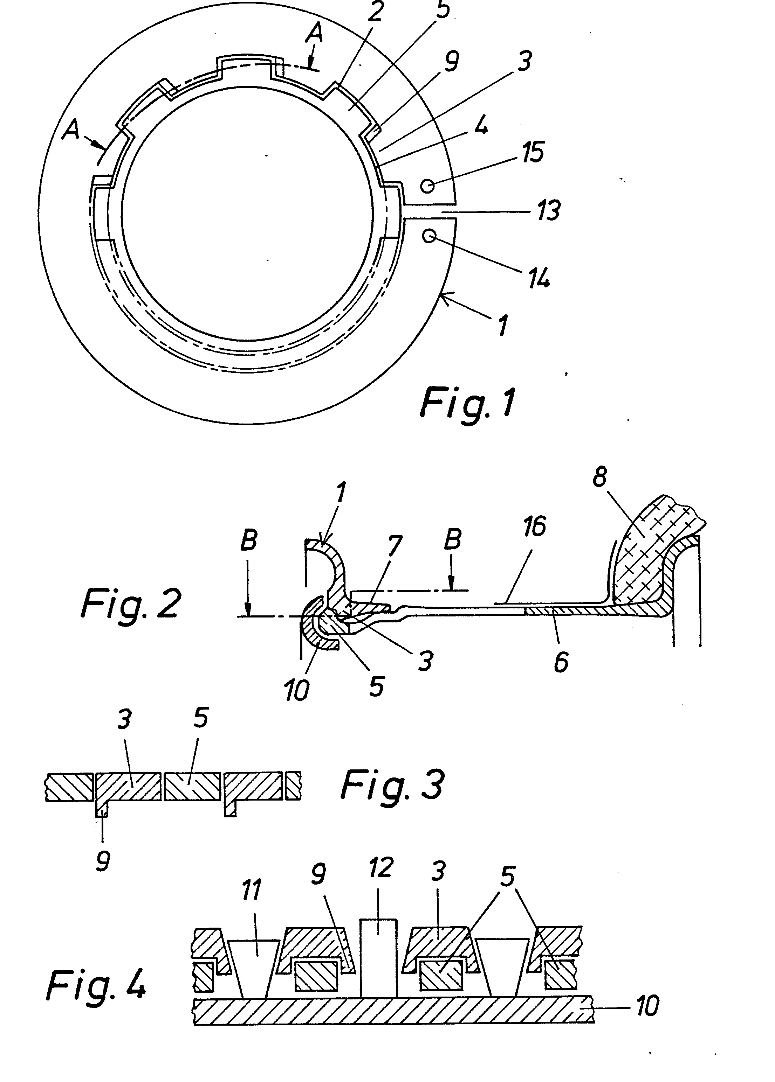

Der Seitenring 1 von Fig. 1 hat die bekannten Ausnehmungen 2 und Fortsätze 3, die mit entsprechenden Ausnehmungen 4 und Fortsätzen 5 der Grundfelge 6 in Eingriff kommen. Der Seitenring 1 ist weiters mit der

./.

Stahlschrägschulter 7, der radialen Auflage für den Reifen 3, einstückig verbunden. Schließlich ist der Seitenteil 1 und daher auch die Schulter 7 geschlitzt, d.h. er weist einen Schlitz 13 auf, sodaß er leicht über die Grundfelge 6 bzw. in Umfangsrichtung dazu geschoben werden kann. Desgleichen wird der Spielraum des Seitenringes 1 zur Grundfelge 6 praktisch gleich Null sein, wenn der Reifen aufgeblasen ist und auf der Schulter 7 aufliegt.

An den Fortsätzen 3 des Seitenringes 1 sind die Anschläge 9 - Fig. 3 - angeordnet, sodaß nach dessen Anordnen an die Grundfelge 6 die in Axialrichtung zeigenden Anschläge 9 für den Seitenring 1 in der einen Umfangsrichtung einen Anschlag bilden.

Wie die Fig. 4 zeigt, ist ein Fortsatz 3 mit zwei Anschlägen 9 versehen, d.h. in Umfangsrichtung des Seitenringes 1 an den beiden Enden eines einzelnen Fortsatzes 3, was einen guten Eingriff des Seitenteiles 1 mit der Grundfelge 6 ermöglicht.

Die Fig. 2 und 4 bringen einen Abdeckring 10, durch den die Fortsätze 3 und 5 bzw. deren Zwischenräume gegen Schmutz und dergleichen abgedeckt werden. Der Abdeckring 10 ist auf verschiedene Art befestigbar.

Statt allen oder auch nur einiger Anschläge 9 oder um den Eingriff von Seitenteil 1 und Grundfelge 6 noch zu verstärken, werden mit dem Abdeckring 10 einstückig verbundene Sperrkörper 11 vorgesehen, wie Fig. 4 festhält.

Zudem wird in Fig. 4 vorgeschlagen, die Berührungsflächen der Anschläge 9 und Sperren 11 schräg zu gestalten, d.h. die Sperrflanken verlaufen nicht in einem rechten Winkel zur Axialrichtung der Felge.

./.

0150703

Die Befestigung des Abdeckringes 10 kann auch durch einige über dessen Umfang verteilten Federn 12 erfolgen, welche Federn auf den Seitenring 1 bzw. dessen Ausnehmung 2 nach außen radialen Druck ausüben und so eingreifend der Abdeckring 10 gehalten wird. Wenn eine Feder 12 den ganzen Raum eines Sperrkörpers 11 beansprucht, so entfällt letztere, wie Fig. 4 zeigt. Der Abdeckring 10 kann auch einen andersartigen Schnappverschluß haben, desgleichen kann eine Rad(ziehr)kappe dessen Funktion übernehmen.

Als weitere Sicherung für den Abdeckring 10 kann er zusätzlich mit Schrauben befestigt sein, wobei im Abdeckring im Bereich der Schrauben ein Spiel vorzusehen ist, um ein eventuelles Bewegen des Seitenteiles 1 während der Fahrt zu berücksichtigen.

Weiters ist es möglich, den Seitenteil 1 mit zwei Bohrungen 14 und 15 zu versehen, in welche eine Klammer oder dergleichen eingeführt werden kann oder - ähnlich den Sperrkörpern 11 oder den Federn 12 - Verlängerungen des Abdeckringes 10, wodurch der Seitenteil 1 gehalten wird, weil die Vergrößerung dessen Umfanges damit verhindert wird, ein Verkürzen des Umfanges muß jedoch durch Vorsehen eines Spiels möglich sein.

Der Reifen 8 soll in seinem inneren Bereich abgeschlossen werden, z.B. durch die Folie 16, die zumindest teilweise, z.B. durch Kleben, am Reifen 8 befestigt ist. Die Folie 16, die - in Axialrichtung betrachtet - verschieden stark sein kann, so im Bereich der Berührung von Schrägschulter 7 und Grundfelge 6, soll auch das Ventil enthalten. Damit kann auch bei schlecht abschließendem Reifen, z.B. bei beschädigter Felge oder Eindrücken in Kurvenfahrt, nicht Luft entweichen. Die Folie 16 ist auch für andere Felgen mit Vorteil anwendbar.

Erfindungsgemäß ist es nun möglich, sehr einfach und daher schnell einen Reifen von einer Felge ab- bzw. anzumontieren, wobei keinerlei Behelfe nötig sind.

Wie erwähnt, ist eine erfindungsgemäße Sperre des Seitenteils 1 sehr vielfältig. So kann dieser bzw. jeder einzelner Fortsatz 3 keinen, einen oder mehr als nur einen Anschlag 9 aufweisen. Desgleichen kann der Abdeckring 10 auch keine Sperrkörper 11 haben. Weiters kann auch auf eine, eine Selbsthemmung erzeugende, schräge Ausführung der Berührungsflächen der in Eingriff stehenden Teile, wie z.B. Anschläge 9 und Sperrkörper 11, wie in Fig. 4 gezeigt, verzichtet werden, sondern gerade, wie in Fig. 3, ausgeführt sein.

Durch die Erfindung ist es nun möglich, bei einem Kraftfahrzeug nur mehr einen Reifen als Reserve mitzunehmen. Weiters ist zu empfehlen, eine einfachere Befestigung der Felge an der Bremstrommel oder ähnlichem Fahrzeugteil zu wählen, als die übliche Verschraubung, da diese kaum mehr gelöst wird. Auch ist ratsam, Felge und Bremstrommel einstückig auszuführen, insbesondere bei Zwillingsbereifung das innere Rad betreffend.

An sich ist ein erfindungsgemäßer Seitenteil 1 in Bezug auf ein Fahrzeug außen an der Grundfelge angeordnet, um einen Reifenwechsel ohne Abnahme der Felge vom Fahrzeug durchführen zu können. Bei Pkw's könnte der Seitenteil 1 auch aus Gründen der Schönheit innen angeordnet sein, daher könnten Aluminium-Felgen sehr einfach sowohl mit Sommer- als auch Winterreifen bestückt werden.


Patentansprüche

Patentansprüche:

1. Felge, insbesondere für Schrägschulterreifen von Kraftfahrzeugen, die zumindest zwei Elemente enthält, die an um den Umfang der Felge verteilten Stellen ~~angeordnet~~ *aufweisen* ~~sind~~ und vorzugsweise in Axialrichtung der Felge ineinandergreifen, wobei diese Stellen einen bestimmten Winkelbereich der Felge umfassen, wobei durch das gegenseitige, vorzugsweise einen bestimmten Winkelbereich der Felge umfassende, Bewegen dieser zwei Elemente ein Sperren bzw. Lösen dieser Elemente erreicht wird, wobei Mittel vorgesehen sind, um besagtes Sperren zu sichern, wobei im abschließbaren Bereich der Felge eine radiale und axiale, vorzugsweise um 360° der Felge sich erstreckende, Abstützung für den Reifen in einstückiger Form vorliegt, dadurch gekennzeichnet, daß die genannte Abstützung (Seitenring 1) – in Umfangsrichtung der Felge gesehen – zumindest einmal eine Unterbrechung (Schlitz 13) aufweist.

2. Felge nach Anspruch 1, dadurch gekennzeichnet, daß eine Abdeckung (Abdeckring 10) für die genannten Stellen (Fortsätze 5, 3) bzw. deren Zwischenräume (Ausnehmungen 2, 4) vorhanden ist, um einen Schutz gegen Schmutz und dergleichen zu erreichen für die genannten Stellen bzw. Zwischenräume.

3. Felge nach Anspruch 1 oder/und 2, dadurch gekennzeichnet, daß die Abdeckung (10) sich über 360° der Felge erstreckt.

4. Felge nach Anspruch 1, 2 oder/und 3, dadurch gekennzeichnet, daß die Abdeckung (10) mit zumindest einer in genannte Stellen (3, 5) bzw. deren Zwischenräume (2, 4) eingreifende Sperre (Sperrkörper 11) einstückig verbunden ist. .

5. Felge nach Anspruch 1, 2, 3 oder/und 4, <u>dadurch ge-</u>
<u>kennzeichnet</u>, daß die genannte Abstützung (10) mit
in einer oder in beiden Umfangsrichtungen der Felge
sperrenden Anschlägen (9) einstückig verbunden ist,
welche Anschläge mit der Grundfelge (6) in lösbarem
Eingriff stehen.

6. Felge nach Anspruch 1, 2, 3, 4 oder/und 5, <u>dadurch</u>
<u>gekennzeichnet</u>, daß die Berührungsflächen von in
Eingriff stehenden Teilen (5, 9, 11) einen selbsthemmenden Winkel aufweisen.

7. Felge nach Anspruch 1, 2, 3, 4 oder/und 5, <u>dadurch</u>
<u>gekennzeichnet</u>, daß die Sperrkörper (11) einstückig
mit der Abdeckung (10) verbunden sind.

8. Felge nach Anspruch 1, <u>dadurch gekennzeichnet, daß</u>
eine Unterbrechung (Schlitz 13) - in Umfangsrichtung der Felge gesehen - kürzer ist als die genannte Abstützung (Seitenring 1).

0150703

Fig.1

Fig.2

Fig.3

Fig.4